# EUROPEAN PATENT SPECIFICATION

(11) **EP 0 458 856 B1**
(45) Date of publication and mention of the grant of the patent: **08.11.1995**
(21) Application number: 90903445.6
(22) Date of filing: 15.02.1990
(51) Int. Cl.: D03D 49/00, G05B 15/00

(54) **APPARATUS FOR CONTROLLING YARN FEEDERS OF A TEXTILE MACHINE**
VORRICHTUNG ZUM STEUERN VON ZUFUHRELEMENTEN IN EINE TEXTILMASCHINE
AGENCEMENT SERVANT A COMMANDER DES ELEMENTS DE DEVIDAGE DANS UNE MACHINE TEXTILE

(30) Priority: 16.02.1989 SE 8900534
(43) Date of publication of application: 04.12.1991
(73) Proprietor: IRO AB, S-523 01 Ulricehamn (SE)
(72) Inventor: FREDRIKSSON, Lars-Berno, S-511 57 Kinna (SE)
(74) Representative: Grünecker, Kinkeldey, Stockmair & Schwanhäusser Anwaltssozietät
(86) International application number: PCT/SE90/00099
(87) International publication number: WO 90/09475

(56) References cited:
- EP-A- 0 256 519
- US-A- 4 716 943

## Description

The invention relates to an apparatus as disclosed in the preamble part of claim 1.

It is known from US-A-4 716 943 to provide in a textile machine like a weaving machine a computer for controlling and supervising functions of the yarn feeders of the machine.

A weaving machine and its yarn feeders represent a large number of functions which have to be individually controlled and supervised and have to be mutually inter-related to achieve an optimum function of the weaving machine. The controlling system must work rapidly and functionally reliably with short reaction times. A computerized system allows to store a large amount of information for the control and the supervision. Signal-processing units, transmitters and drive units can be used.

Message transmission in the computerized system must take place accurately and with such speed that events which have occurred are detected sufficiently rapidly in the places where the events which have occurred are to be acted upon. For each transmission a sequence of actions is to be carried out. This sequence must be synchronized, which can be achieved with trigger signals which gives rise to a certain sequence being carried out in the system, and, acknowledgement signals which issue acknowledgement that an effected sequence is performed. An acknowledgement signal can be such that it directly initiates a new run.

It is an object of the invention to optimize the weaving function in the weaving machine so that even rabid weaving runs have gentle effects or stress on different parts of the feeders. This means that actions, e.g. activations and stops, are to be prepared in advance so that sudden accelerations and decelerations are avoided or high speeds can be avoided.

In the apparatus according to the invention on the basis of the programmed or stored weaving pattern or parts of the weaving pattern the control element ascertains the up-coming yarn winding-on requirement. In the event of a yarn winding-on requirement, which would cause acceleration, speed or deceleration of the yarn in its winding-on on the feeder exceeding a predetermined value a control action from the control element proceeds in advance to the function control unit of the feeder, before yarn consumption actually starts, in order to prevent acceleration, speed or deceleration of the yarn from exceeding said predetermined value.

The function control units of the feeders comprise communication control parts with connection interfaces to a communication connection (a data bus) and microcomputers for control or supervision of the functions of the feeder. A serial bit flow effected by the communication control parts or the units at the serial connection proceeds in the form of messages which comprise a frame and data part. Said frames comprise bits which are divided up for the transmission and reception functions of the system.

The function control units or the communication control parts can be responsive to predetermined markings or addresses in said messages. In the event of a message intended for a selected feeder, this receives and stores the message for action depending upon the content of the message.

The function control units can also work with a feedback function with transmitters which feedback stepwise or continuously a parameter change caused within the control function, e.g. change in movement, state etc.

Informations can be sent from one unit to another or from the control element (the main computer) which is part of the computer system of the weaving machine. Said information can relate to control information or activation information, which in turn selects or intiates stored control information in the unit concerned, e.g. in a second microcomputer. With said control information the unit effects control actions of the associated feeder The control actions can control the motor of the feeder depending upon a weaving pattern which is programmed in the computer system of the weaving machine. The control action can relate to a control of the motor of the feeder in relation to the motors of other feeders. There may be a control of the motor of the feeder for preparatory acceleration and/or deceleration runs for the motor in advance so that the motor reacts with a certain motion prior to the execution of the actual function of the feeder. Said runs can be controlled so that overspeeding can be prevented.

In the drawings is :
- Figure 1: a skeleton diagram of a part of a weaving machine,
- Figure 2: a first type of message,
- Figure 3: another type of a message,
- Figure 4: a block diagram of the connection of two units to a network,
- Figures 5-7: signal trains, attributable to three different units,
- Figure 8: a block diagram of a different constructions of units, and
- Figure 9: in principle a weaving machine with feeders and a computer system.

A system is intended comprising two or more yarn feeders for a textile machine like a weaving machine for weaving a free pattern (Multi-colour weaving). With a variable speed control of the yarn winding-on element of each feeder all feeders procure a yarn stock from a yarn supply assigned to each feeder. Said yarn stock permits at every moment a yarn consumption from the feeder which is determined by a weaving pattern and which is representative of the operating case in question and is programmed or stored in a control element assigned to all feeders. On the basis of the programmed or stored weaving pattern, or part of the weaving pattern, the control element ascertains the coming yarn winding-on requirement. This ascertainment can be achieved depending upon possible sensing or measurement of the existing yarn stock on each feeder. In the event of a yarn winding-on requirement, which would cause a greater acceleration, greater speed or greater deceleration of the yarn during winding-on, a control action, which emanates from the control element depending upon said ascertained coming yarn winding-on requirement, proceeds in advance to the speed-control of the feeder. By doing this acceleration, speed or deceleration of the yarn is prevented from exceeding a predetermined value. Considerable advantages can then be achieved because a constant speed leads to minimum loss in the yarn feeder. No unnecessary stresses occur in the yarn or rotating parts of the feeder.

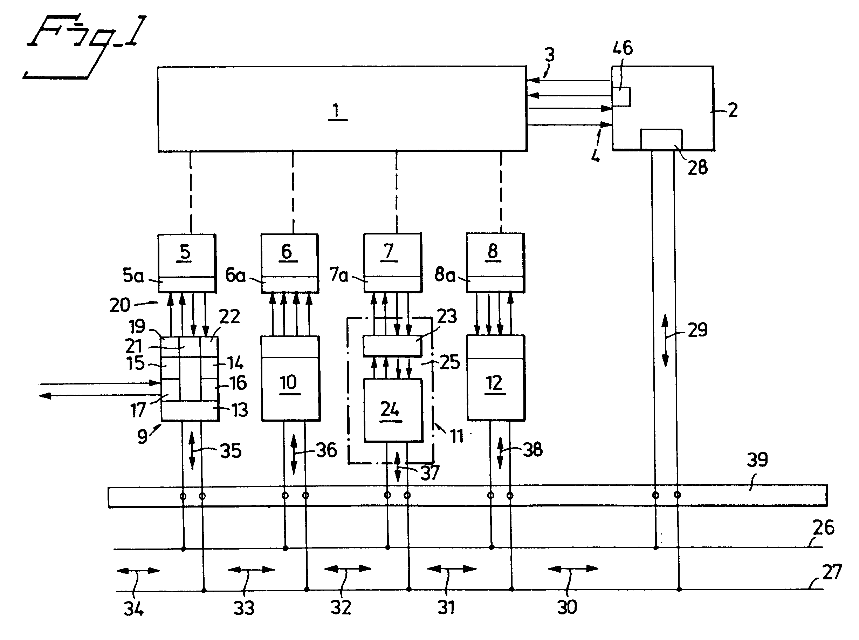

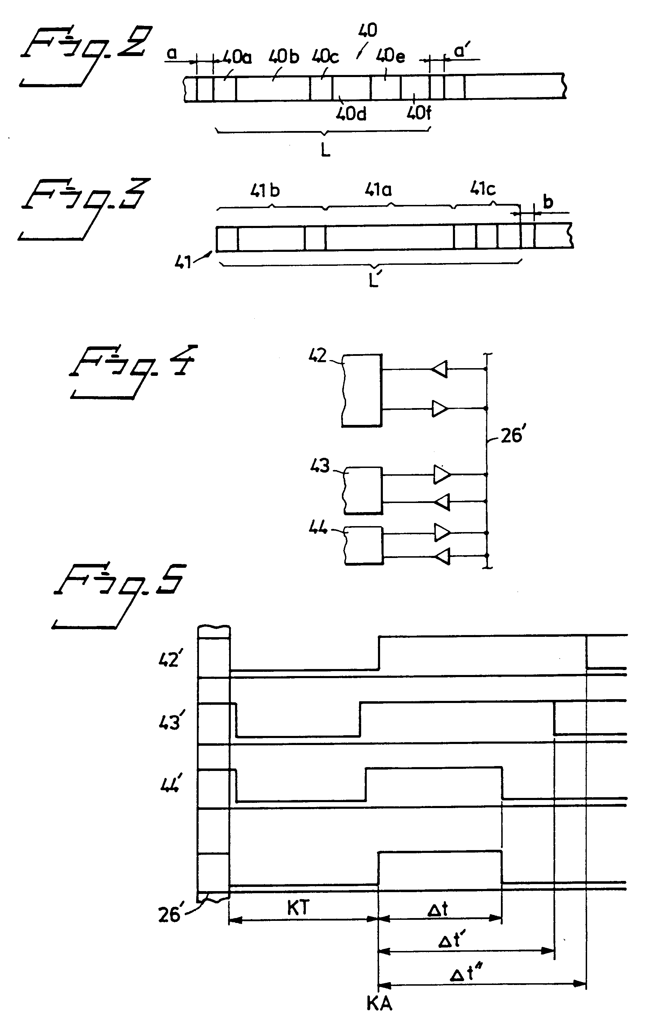

In Figure 1, a textile machine 1 e.g. a weaving machine like a shuttle machine, or a jet machine, is provided with a supervising computer system 2, by means of which the different functions of the machine are controllable and supervisable. The connections of the system to the machine have been symbolized with 3 and the connections of the machine to the system with 4. Yarn feeders 5, 6, 7 and 8 are connected to the weaving machine 1. The feeders are of known type and are therefore not described in detail. E.g. their yarn supplies have not been shown for sake of clarity.

Each feeder has electrical connection parts 5a, 6a, 7a and 8a and a function control unit 9, 10, 11 and 12. The units are preferably located close to or on each feeder. Each unit comprises at least one first micro-computer 13, 14 for serial interface control and serial bit flow processing. Memory circuit 15 (RAM, ROM) and a clock circuit 16 are included. There can also be circuits for time logic, fault processing etc. A communication port 17 is provided, via which read-in and read-out elements can be connected via connections 18 for entering and retrieval of information, for programming etc. Each unit is connected to a second micro-computer 19 which effects the action, supervision etc. of the respective feeder. By means of the second micro-computer 19, calculations can be carried out for optimum control and supervision of each feeder via the connection 20. The second micro-computer comprises conventional peripherals such as memory circuits 21, communication circuits 22 etc. The connection interface comprises A/D and D/A circuits, communication terminals, pulse output etc. The second micro-computer 19 can be integrated in the unit 9 or alternatively constitute a separate unit. A further micro-computer 23 can be connected to a separate communication control part 24, communicating via a connection interface 25 for parallel communication. The units 9-12 can be constructed with identical, or essentially identical, connection interfaces so that individual interchangeability exists among the units. Any unit can take the place of another unit, at least after a minor adjustment. In cases where a separate communication control part 24 exists in all units, these can be made individually interchangeable in corresponding manner.

Each unit 9-12 is arranged connectably to a two-wire connection 26, 27 for serial communication or message transmission. The system 2 can comprise at least one control computers 28 as a supervising computer or control element for the units 9-12. Two-way or one-way exchanges of information between the control element and the units or between the units is symbolized with arrows 29-38.

The connection with the digital connection 26, 27 (data bus) is made by terminal elements 39. Message exchange can take place with messages of different types. A bit flow between the units or between the units and the control element is arranged in said messages which comprise a frame part and a data part (applies to one type of message). The messages can be executed with markings or addresses intended for the units. Each unit receives and stores its addresses which are assigned in the system. Alternatively, the system can operate with a certain order for the units. In the event that the units are controlled from supervising computer 28, the system can work with a start-up phase, in which control information is issued for selection of feeder functions, e.g. depending upon a programmed or selected weaving pattern, and an operation phase in which selected feeder functions are diagnosed, supervised, controlled, and effected. The yarn quantity can be measured, the thread tension supervised etc.

Two or more message types can be utilized, one message type being given priority over other message types at the digital serial connection. Figure 2 shows a first type of message 40 which consists of a frame part which has the same length L as the message 40. The frame is constructed of a start field 40a, a priority field 40b, a control bit field 40c, a total control field 40d, and acknowledgement and completion fields 40e and 40f. The content of the priority field 40b determines the ranking of the message. Instantaneous signals as trigger signals have highest priority. Normal communication signals have lower priority according to the time requirement. Pick signals, yarn break signals, arrival signals, feeder exchange signal etc. have the highest priorities, while transmission of information regarding the long-term functional working in the textile machine has lower priority.

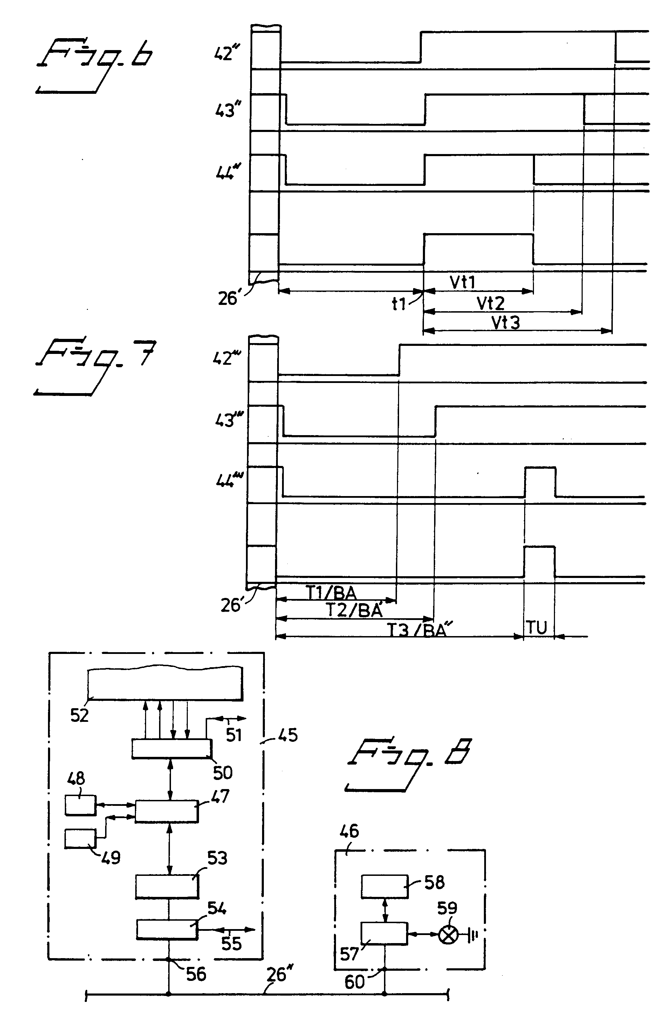

A second message type 41 (Figure 3) also comprises a data field 41a. The frame part in message 41 consists of the fields 41b and 41c. The data field contains information which is to be transmitted between the units.

The communication works bit-synchronously. The messages are assigned relatively short lengths L and L'. In this manner, a message of lower priority does not obstruct a message of higher priority in the event of transmission of the latter message taking place when a unit with a higher ranked message wishes access to the connection. The message length L' can be selected in the order of magnitude 0.05 - 0.1 ms (at 1 Mbit/sec). Distances a, a' and b respectively are selected with great accuracy. Bit speeds of e.g. 1 Mbit/sec or higher, e.g. 4 Mbit/sec, are utilized.

A basic feature of one type of transmission may be that two different types of logic levels are used, namely a dominant level "0" and a non-dominant level "1". By said two levels, prioritization and fault detection are made possible. The hardware in the system is designed so that if one or more transmitters or units transmit a dominant level, this will be received in the communication, irrespective of how many units are transmitting a non-dominant level. The transmission of a bit is effected by means of the transmitted bit being divided up into five parts. The first part is a synchronizing part which normally starts the bit. The second part consists of time increase part, with which the bit is increased in the event of resynchronization. A third part relates to a first delay part which is attributable to a time interval, during which a stable level is obtained. At the end of this time, the value of the bit is read off. The fourth part consists of a second delay part, which forms a time interval in order that the circuit may determine internally whether it is the current unit which is to transmit the coming bit and which bit is to be transmitted in such a case. The fifth part is attributable to a reduction part which can be removed in the event of resynchronization.

All units which want to have access to the connection start to transmit their message as soon as there is a free space at the connection. The different messages have different priority. Messages with lower priority are interrupted. The message with the highest priority comes to be completed. All units are adjusted to receive an assigned message and pick it up and, depending upon the message, carry out the function in question or pick up an actual piece of information. Acknowledgement can take place in different ways. A receiving unit can e.g. transmit an acknowledgement bit when it considers it has received a correct message. Another possibility is that the receiving unit answers by means of transmitting a message back depending upon a received message. The receiver can alternatively transmit a special acknowledgement message.

A manner of ordering priority is thus that after a completed message, the units receive different delays or waiting times before they can start the transmission. The unit which has the highest priority has a short waiting time and those with low priority have to wait a long time before they can transmit. The waiting time with normal use of the connection with a maximum transmission speed can be 148 µs (2 x 111 bits) plus the time it takes for the processor to process the information with its program. The minimum transmission time is half of the maximum. By means of only allowing, at sensitive moments, transmission of messages without data, this time can be reduced to 62 µs. All these calculations are made with a bit frequency of 1.5 Mbit/sec and on the assumption that the transmitted message has the highest priority. There is the possibility of interrupting a transmission by transmitting a fault frame, which is transmitted automatically when faults are discoverad in the communication and all units interrupt the reading-in and disregard all information read in. By transmitting such a signal, the message in progress can be interrupted and an important message can be transmitted directly afterwards. This should reduce the responce time to a maximum of 44 and a minimum of 40 µs. For messages which comprise a predetermined number of bits with the same level in succession, the transmission works with a bit which is inverse and follows the predetermined number (e.g. 5). The inverse bit can optionally be selected to form part of the message or not. Interference is thus prevented from locking the connection. In the event of faults, all units transmit e.g. six dominant bits in succession as a sign that they have perceived the fault. All units then transmit e.g. six non-dominant bits. With this, the communication is restored and each unit is ready to or can start transmitting. Each unit which received the faulty message discards it and the unit which sent the message from the start resends. By these means, speeding up of alarm messages is brought about.

Figure 4 shows three units 42, 43 and 44 connected to the connection 26'. The following table shows the priority selection. The construction of the priority field in the message for the respective unit 42-44 can be seen in the table. The message of the unit 44 has most dominant levels and is selected before the messages of the units 42 and 43.

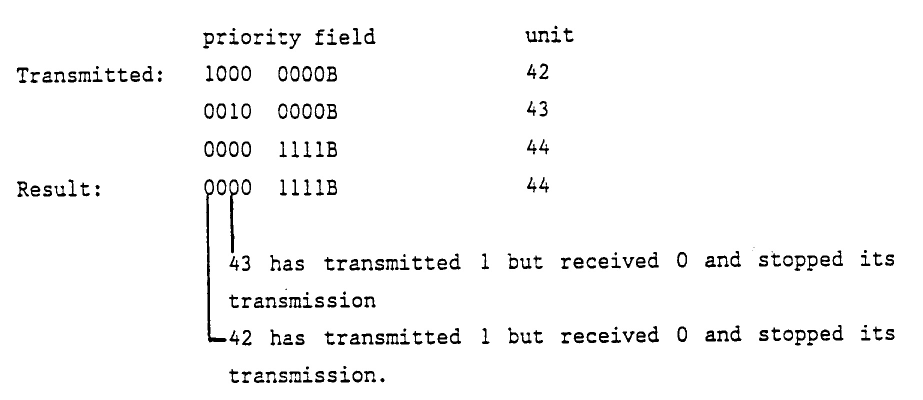

Prioritization can take place also in one field of the message with non-dominant and dominant levels and bit spaces. When a unit compares the transmitted bit in a bit space with the state received in the communication, the unit notes that a non-dominant bit has been overwritten by a dominant one. The unit interrupts its transmission. At another bit space a further unit makes the same observation of the difference between the transmitted bit value and that which the unit sees in the communication, for which reason the transmission is interrupted. At a further bit space another unit notes that it had the highest priority since it never had to interrupt its transmission and consequently completes the message.

In Figure 5 units 42', 43' and 44' are assigned different waiting times Δt, Δt' and Δt'' after collision. The unit 42' which is assigned the longest waiting time Δt'' receives priority at the connection, whereas the other units must thus wait for their respective transmission.

In the event of simultaneous starts after a time interval, the transmitting units indicate that their transmission is colliding. When a transmitting unit detects this, it goes into a fault detecting phase in order to complete the message and indicate to other units that the transmission has collided. The completion is carried out in such a manner that all units involved transmit a sequence of dominant bits which overlap one another so that by these means a marked completion of the collision can be detected by all units. From a point in time KA, all units wait a predetermined time. The unit with the highest priority waits the shortest time. The units with lower priority wait longer and, when the time comes at which the latter units are to start to transmit, they indicate that the connection is occupied, for which reason the units concerned have to wait until the communication becomes free.

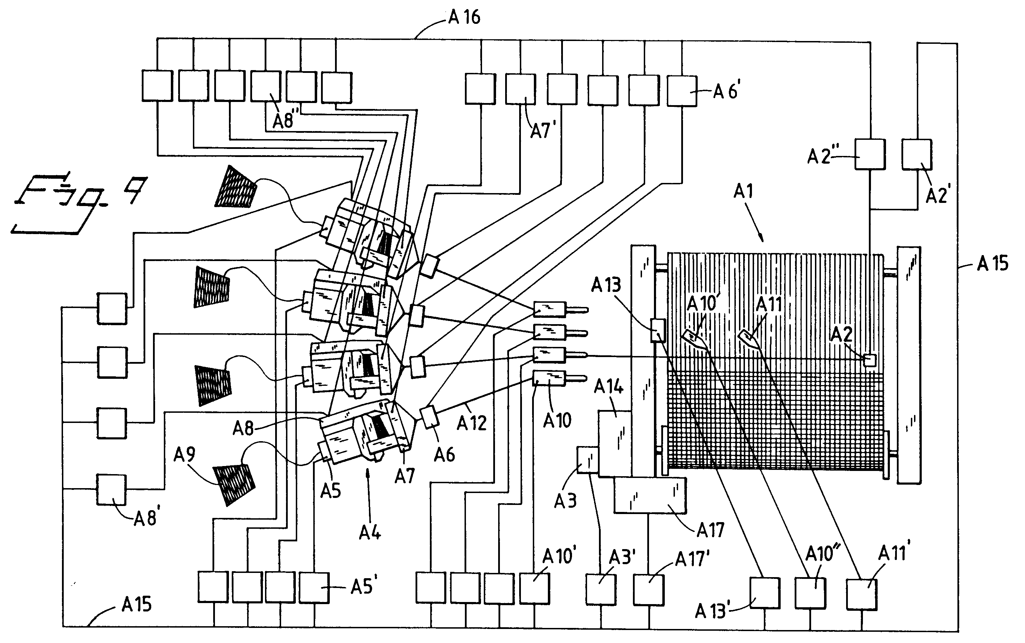

Figure 6 shows that dominant levels are first transmitted in order to make clear that a unit wishes to transmit. The units 42'', 43'' and 44'' are assigned different waiting times vt1, vt2 and vt3 after all units have finished transmitting dominant bits. The unit 44'' with the shortest waiting time vt1 gains priority. The edges of the pulse trains must be kept to the time t1 with great accuracy (e.g. 100 nanosec).

According to Figure 6 the units do not start to transmit any message without starting the sequence which in Figure 5 indicates a collision. A collision is thus signalled irrespective of whether any other unit is transmitting or not. The advantage is that the delay is constant and the collision indication does not need to be carried out. Prioritization takes time even if there is only one unit which is to transmit.

Figure 7 shows priority selection for units 42''', 43''' and 44'''. The starting point is the number of bits BA, BA' and BA'' or times T1, T2 and T3 respectively in the respective message. The message for the unit 44''' with the greatest number BA'' receives the transmission state. The start sequence is used for prioritization. The length of the start sequence varies. The unit which has the longest start sequence is the last to stop with its start sequence and has highest priority. After prioritization, time TU expires for the unit to clarify that it is itself which is to transmit. The prioritization times T1, T2 and T3 must be so different that they can not be mixed.

Figure 8 shows units 45 and 46 of different types. Unit 45 is highly intelligent. Unit 46 is a simpler type. The unit 45 has a microcomputer 47 which is connected to memory areas 48, 49 (RAM or ROM) and works into a connection interface 50 with D/A and A/D converters. Also included are counters, pulse outputs and pulse inputs. The connection interface 50 is provided with a communication terminal 51 and works into an electromechanical part 52 belonging to an element in the textile machine. The microcomputer 47 also works into a communication part 53 which comprises at least one micro-computer. A circuit 54 which configures unit 45 is provided with inputs and outputs 55. The unit 45 is connected via output 56 to the digital connection 26''. The unit 46 has a communication part 57 which is connected to at least one transmitter 58 and at least one indication element and/or execution element 59 and has an output 60 to the connection 26''.

Figure 9 shows symbolically an airjet weaving machine A1. Yarn arrival detectors A2 and reference transmitters A3 for the machine angle are provided. Four feeders A4 belong to the machine. Each feeder A4 is provided with inward and outward thread monitors A5 and A6, a thread measuring device A7 and a motor control element A8, and a yarn supply A9 of the yarn A12. Each feeder is assigned a main nozzle A10 and relay nozzles A10' and A11, and a cutting element A13. The drive element of weaving machine A1 is symbolized with A14. The weaving machine A1 is controlled and supervised by two computerized systems via serial digital connections A15, A16. The computerized control system of weaving machine A1 is indicated with A17. The units have the same reference indications as their associated elements, but completed with primes. Only the units whose elements are provided with reference indications are marked with corresponding references.

Some elements (e.g. main nozzle for each feeder) each have their own unit, other elements share the same unit. Other units (motor control elements A8) can be connected to two units A8', A8''. The control unit A17 of the machine is connected to A15 via the unit A17'. The arrival detector A2 is connected to both systems via units A2' and A2''.

A start-up phase is carried out as follows : The respective feeder reads off its identification code via the communication transmission effected at the respective connection from a supervising unit in the system. The weaving machine informs the system of its breadth and working speed. The weaving machine further informs the respective feeder of the coming pick sequence number, e.g. 16, for the machine speeds most closely corresponding to the number. The weaving machine also informs the respective feeder of how much time will expire after the reference signal before the feeder has to release the yarn. The respective feeder prepares itself with this information by forming an optimum yarn stock and adjusting optimum maximum speed.

An operation phase is then started by the weaving machine giving a start signal. Transmitter A3 issues reference signals. The feeder whose turn it is to release yarn, counts down the time until the release time and then releases yarn. The feeder also measures the yarn and activates a stop element at the right moment. The arrival detector A2 gives a message when the yarn passes. Thereafter, the sequence is repeated, reckoned from the reference signal of the reference transmitter A3. The repetition depends upon the length of the sequence. E.g, the sequence can be repeated a further seven times. Thereafter, the weaving machine gives a pick sequence of a number of picks, e.g. eight picks, which are to come after the remaining picks, in this case eight picks, which have already been given. Once again the sequence is repeated after a reference signal is received. In the operation phase, different types of message according to Figures 2 and 3 are thus called for. The start signal of the weaving machine is a typical trigger signal. The signals from the reference transmitter, the activation signals of the feeders for their stop elements, and the signals from the arrival detector are trigger signals, too. These signals have highest priority. Lower priority messages is speed information and other messages for the feeders. These messages can be stored in memory stacks working on the first-in-first-out principle. The yarn quantity e.g. can be directly received in these messages.

## Claims

1. Apparatus for controlling a plurality of yarn feeders (A4,5-8) of a weaving machine (A1) with the aid of a computerized system (2) for providing a selected weaving pattern,
each yarn feeder (A4,5-8) having a yarn winding-on element driven by a motor for winding-on the yarn (A12) into a yarn stock on the yarn feeder, and a variable speed control for operating the winding-on element,
the variable speed control including a function control unit (9-12,45,46) for controlling operation of the variable speed control so that the yarn feeder continuously maintains a yarn stock sufficient to provide the amount of yarn needed for achieving the weaving pattern,
**characterised in that**
a control element like a main control computer (28) is assigned to the yarn feeders (5-8,A4) and is connected to the function control units (9-12,45,46) of the yarn feeders (5-8,A4) via a communication network (26,27,A16,A15),
said control element having programmed or stored information about the weaving pattern,
said control element being adapted to determine - on the basis of the weaving pattern information - such upcoming critical winding-on requirements for the yarn feeders which would cause acceleration, speed or decelaration conditions for the yarn during winding-on exceeding a predetermined value of acceleration, speed or deceleration,
said control element being further adapted to emanate upon detection of a critical upcoming yarn winding-on requirement a control action for the function control unit of a respective yarn feeder,
said control action affecting the respective function control unit to preparatorily determine acceleration, speed or decelaration for the motor of the winding-on element and to run the motor with the determined acceleration, speed or deceleration in advance to the execution of the upcoming winding-on requirement in order to prevent that acceleration, speed or deceleration exceeds said predetermined value when executing the winding-on requirement.

2. Apparatus as in claim 1, **characterised in that** the control element (28) is adapted to determine critical upcoming yarn winding-on requirements for a respective yarn feeder on the basis of the weaving pattern information and information about the existing yarn stock on the yarn feeder, said latter information being derived by measuring or sensing the yarn stock.

3. Apparatus as in claim 1, **characterised by** a communication network for serial and digital message transmission.

4. Apparatus as in claims 1 to 3, **characterised in that** messages (40,41) transmitted in the communication network are ranked with at least two different priorities, and that messages representing trigger signals have the highest priority over messages representing long-term functional working signals having lower priority according to the time requirement.

5. Apparatus as in claim 1, **characterised in that** the function control units (9-12,45,46) are located physically close to their yarn feeders (5-8,A4),
that each of the function control units (9-12,45,46) includes at least one communication control part (24,53,57) being capable of effecting control and supervision of all yarn feeder functions of all feeders,
and that the function control units (9-12,45,46) or at least their communication control parts are individually interchangeable with one another.

6. Apparatus as in claim 1, **characterised in that** each yarn feeder (A4,5-8) is connected to a transmitter for feeding back information about changes of functional parameters into the communication network.

7. Apparatus as in claim 1, **characterised in that** each function control unit includes memory portions for receiving and storing messages (40,41) received from the control elements (28), said messages (40,41) containing addresses for directing the messages to one or more of the function control units.

8. Apparatus as in claim 1, **characterised in that** the control element (28) is provided with programmed or stored information about a start-up phase and an operation phase for the function control units of the yarn feeders,
the information about the start-up phase including identification of the yarn feeders by identification numbers and transmitting functional parameters related to the textile machine operation for establishing the operational requirements for each yarn feeder,
the information about the operation phase including the transmission of instantaneous trigger signals,
and that the control element is adapted to transmit said identification numbers and said functional parameters to the respective function control unit during the start-up phase and to transmit trigger signals during the operation phase to the function control units via the communication network.

## Patentansprüche

1. Vorrichtung zum Steuern einer Vielzahl von Fadenlieferern (A4,5-8) einer Webmaschine (A1) mit Hilfe eines computerisierten Systems (2) zum Schaffen eines ausgewählten Webmusters,
wobei jeder Fadenlieferer (A4,5-8) ein Faden-Aufwickelelement besitzt, das zum Aufwickeln des Fadens (A12) in einem Fadenvorrat auf dem Fadenlieferer durch einen Motor angetrieben wird, und wobei jeder Fadenlieferer eine variable Drehzahlsteuerung für die Operation des Aufwickelelementes besitzt,
und wobei die variable Drehzahlsteuerung eine Funktionssteuereinheit (9-12,45,46) einschließt zum Steuern der Operation der variablen Drehzahlsteuerung derart, daß der Fadenlieferer kontinuierlich einen Fadenvorrat aufrechterhält, der ausreicht, die zum Schaffen des Webmusters benötigte Fadenmenge bereitzustellen,
**dadurch gekennzeichnet, daß**
den Fadenlieferern (5-8,A4) ein Steuerelement wie ein Hauptsteuercomputer (28) zugeordnet und mit den Funktionssteuereinheiten (9-12,45,46) der Fadenlieferer (5-8,A4) über ein Kommunikationsnetzwerk (26,27,A16,A15) verbunden ist,
das Steuerelement programmierte oder gespeicherte Information zu dem Webmuster besitzt,
das Steuerelement ausgebildet ist zu bestimmen - auf der Basis der Webmuster-Information - solche kommenden kritischen Aufwickelanforderungen für die Fadenlieferer, die Beschleunigungs-, Drehzahl- oder Verzögerungs-Konditionen für den Faden beim Aufwickeln verursachen würden, die einen vorbestimmten Wert einer Verzögerung, einer Drehzahl oder einer Beschleunigung überschreiten,
das Steuerelement weiterhin ausgebildet ist zur Veranlassung einer Steueraktion für die Funktionssteuereinheit eines bestimmten Fadenlieferers, und zwar nach Feststellung einer kommenden kritischen Faden-Aufwickelanforderung,
wobei diese Steueraktion die jeweilige Funktionssteuereinheit beeinflußt, vorbereitend die Beschleunigung, die Drehzahl oder die Verzögerung für den Motor des Aufwickelelementes zu bestimmen und dann den Motor mit einer bestimmten Beschleunigung, einer bestimmten Geschwindigkeit oder einer bestimmten Verzögerung voreilend zu der Ausführung des kommenden Aufwickelerfordernisses anzusteuern, um zu verhindern, daß die Beschleunigung, die Drehzahl oder die Verzögerung beim Ausführen dieses Aufwickelerfordernisses den vorbestimmten Wert überschreitet.

2. Vorrichtung nach Anspruch 1, **dadurch gekennzeichnet**, daß das Steuerelement (28) ausgebildet ist zur Bestimmung kommender kritischer Faden-Aufwickelerfordernisse bei jeweils einem bestimmten Fadenlieferer aufgrund der Webmuster-Information und einer Information über den vorliegenden Fadenvorrat auf den Fadenlieferer, wobei die letztgenannte Information durch Messen oder Abtasten des Fadenvorrats abgeleitet wird.

3. Vorrichtung nach Anspruch 1, **gekennzeichnet durch** ein Kommunikationsnetzwerk für serielle und digitale Nachrichtentransmission.

4. Vorrichtung nach den Ansprüchen 1 bis 3, **dadurch gekennzeichnet**, daß in dem Kommunikationsnetzwerk übertragene Nachrichten (40,41) mit wenigstens zwei unterschiedlichen Prioritäten geordnet sind, und daß Nachrichten, die Auslösesignale repräsentieren, die höchste Priorität und Priorität über Nachrichten haben, die funktionelle Langzeitarbeitssignale repräsentieren und niedrigere Priorität entsprechend den jeweiligen Zeitanforderungen haben.

5. Vorrichtung nach Anspruch 1, **dadurch gekennzeichnet**, daß die Funktionssteuereinheiten (9-12,45,46) physikalisch nahe bei ihren Fadenlieferern (5-8,A4) angeordnet sind,
daß jede Funktionssteuereinheit (9-12,45,46) zumindest einen Kommunikationssteuerteil (24,53,57) umfaßt, der zum Bewirken der Steuerung und der Überwachung aller Fadenlieferfunktionen aller Fadenlieferer ausgebildet ist,
und daß die Funktionssteuereinheiten (9-12,45,46) oder zumindest deren Kommunikationssteuerteile gegeneinander individuell austauschbar sind.

6. Vorrichtung nach Anspruch 1, **dadurch gekennzeichnet**, daß jeder Fadenlieferer (A4,5-8) mit einem Transmitter verbunden ist zum Zurückführen von Informationen über Veränderungen funktioneller Parameter in das Kommunikationsnetzwerk.

7. Vorrichtung nach Anspruch 1, **dadurch gekennzeichnet**, daß jede Funktionssteuereinheit Speicherabschnitte zum Aufnehmen und Speichern von Nachrichten (40,41) umfaßt, die von den Steuerelementen (28) empfangen werden, wobei die Nachrichten (40,41) Adressen zum Zuweisen der Nachrichten zu einer oder mehreren der Funktionssteuereinheiten enthalten.

8. Vorrichtung nach Anspruch 1, **dadurch gekennzeichnet**, daß das Steuerelement (28) mit programmierten oder gespeicherten Informationen zu einer Anlaufphase und einer Operationsphase für die Funktionssteuereinheiten der Fadenlieferer ausgestattet ist,
daß die Information zu der Anlaufphase die Identifizierung der Fadenlieferer durch Identifikationsnummern und die Übertragung funktioneller Parameter enthält, die zum Einstellen der Betriebserfordernisse für jeden Fadenlieferer auf die Operation der Textilmaschine Bezug haben,
daß die die Operationsphase betreffenden Informationen die Übertragung augenblicklicher Auslösesignale enthält,
und daß das Steuerelement ausgebildet ist zum Übertragen der Identifikationsnummern und der funktionellen Parameter an die jeweilige Funktionssteuereinheit während der Anlaufphase und für die Operationsphase zur Übertragung von Auslösesignalen und zwar jeweils über das Kommunikationsnetzwerk.

## Revendications

1. Dispositif pour commander une pluralité d'alimentateurs de fil (A4, 5-8) d'un métier à tisser (A1) à l'aide d'un système à ordinateur (2) pour former un motif de tissage sélectionné,
chaque alimentateur de fil (A4, 5-8) ayant un élément d'enroulement de fil entrainé par un moteur pour enrouler le fil (A12) en une réserve de fil sur l'alimentateur de fil et une commande à vitesse variable pour actionner l'élément d'enroulement,
la commande à vitesse variable comprenant une unité (9-12, 45, 46) de commande de fonction pour commander la marche de la commande à vitesse variable de manière que l'alimentateur de fil maintienne continuellement une réserve de fil suffisante pour fournir la quantité de fil nécessaire pour réaliser le motif de tissage,
caractérisé en ce
qu'un élément de commande tel qu'un ordinateur de commande principale (28) est affecté aux alimentateurs de fil (5-8, A4) et est connecté aux unités (9-12, 45, 46) de commande de fonction des alimentateurs de fil (5-8, A4) à travers un réseau de communication (26, 27, A16, A15),
ledit élément de commande ayant une information programmée ou stockée concernant le motif de tissage,
ledit élément de commande étant adapté pour déterminer - sur la base de l'information du motif de tissage - des demandez d'enroulement arrrivantes critiques pour les alimentateurs de fil qui créeraient des conditions d'accélération, de vitesse ou de décélération pour le fil pendant l'enroulement supérieures à une valeur prédéterminée d'accélération, de vitesse ou de décélération,
ledit élément de commande étant par ailleurs adapté pour émettre, en réponse à la détection d'une demande d'enroulement de fil arrivante critique, une action de commande pour l'unité de commande de fonction d'un alimentateur de fil respectif,
ladite action de commande attaquant l'unité de commande de fonction respective pour déterminer de façon préparatoire l'accélération, la vitesse ou la décélération du moteur de l'élément d'enroulement et pour faire marcher le moteur avec l'accélération, la vitesse ou la décélération déterminée préalablement à l'exécution de la demande d'enroulement arrivante, afin d'éviter que l'accélération, la vitesse ou la décélération n'excède ladite valeur prédéterminée lors de l'exécution de la demande d'enroulement.

2. Dispositif selon la revendication 1, caractérisé en ce que l'élément de commande (28) est adapté pour déterminer les demandes d'enroulement de fil arrivantes critiques pour un alimentateur de fil respectif sur la base de l'information de motif de tissage et de l'information concernant la réserve de fil existante portée par l'alimentateur de fil, cette dernière information étant dérivée en mesurant ou en palpant la réserve de fil.

3. Dispositif selon la revendication 1, caractérisé par un réseeau de communication pour la transmission série et numérique de messages.

4. Dispositif selon les revendications 1 à 3, caractérisé en ce que les messages (40, 41) transmis dans le réseau de communication sont classés selon au moins deux priorités différentes et en ce que des messages représentant des signaux de déclenchement ont la plus haute priorité comparativement à des messages représentant des signaux de travail fonctionnels à long terme ayant une plus basse priorité selon la condition de temps exigée.

5. Dispositif selon la revendication 1, caractérisé en ce que les unités de commande de fonction (9-12, 45, 46) sont placées physiquement à proximité de leurs alimentateurs de fil (5-8, A4),
en ce que chacune des unités de commande de fonction (9-12, 45, 46) comprend au moins une partie (24, 53, 57) de commande de communication qui est capable d'effectuer la commande et la supervision de toutes les fonctions d'alimentateur de fil de tous les alimentateurs, et en ce que les unités de commande de fonction (9-12, 45, 46) ou au moins leurs parties de commande de communication sont individuellement interchangeables entre elles.

6. Dispositif selon la revendication 1, caractérisé en ce que chaque alimentateur de fil (A4, 5-8) est connecté à un transmetteur servant à renvoyer dans le réseau de communication de l'information concernant les variations de paramètres fonctionnels.

7. Dispositif selon la revendication 1, caractérisé en ce que chaque unité de commande de fonction comprend des parties de mémoire destinées à recevoir et stocker des messages (40, 41) reçus en provenance des éléments de commande (28), lesdits messages (40, 41) contenant des adresses pour diriger les messages à une ou plusieurs des unités de commande de fonction.

8. Dispositif selon la revendication 1 , caractérisé en ce que l'élément de commande (28) est muni d'une information programmée ou stockée concernant une phase de démarrage et une phase de marche pour les unités de commande de fonction des alimentateurs de fil,
l'information concernant la phase de démarrage comprenant l'identification des alimentateurs de fil par des numéros d'identification et la transmission de paramètres fonctionnels liés au fonctionnement de la machine textile pour établir les demandes opérationnelles pour chaque alimentateur de fil,
l'information concernant la phase de marche comprenant la transmission de signaux de déclenchement instantanés, et
en ce que l'élément de commande est adapté pour transmettre lesdits numéros d'identification et lesdits paramètres fonctionnels à l'unité de commande de fonction respective pendant la phase de démarrage et pour transmettre des signaux de déclenchement uax unités de commande de fonction pendant la phase de marche par l'intermédiaire du réseau de communication.
